# EUROPEAN PATENT SPECIFICATION

(11) **EP 2 190 241 B1**
(45) Date of publication and mention of the grant of the patent: **21.03.2012**
(21) Application number: 09171073.1
(22) Date of filing: 23.09.2009
(51) Int. Cl.: H04W 36/08

(54) **Apparatus and method for handover between base stations in carrier aggregation environment**
Vorrichtung und Verfahren zur Übergabe zwischen Basisstationen in Carrier-Aggregation-Umgebungen
Appareil et procédé de transfert entre des stations de base dans un environnement d'agrégation de support

(30) Priority: 21.11.2008 KR 20080116307
(43) Date of publication of application: 26.05.2010
(73) Proprietor: Electronics and Telecommunications Research Institute, Daejeon 305-700 (KR)
(72) Inventor: Lim, Soon-yong, Daejeon-si (KR); Park, Ae-soon, Daejeon-si (KR)
(74) Representative: Esslinger, Alexander

(56) References cited:
- WO-A1-2007/111415
- WO-A1-2008/131589
- US-A1- 2006 053 223
- US-A1- 2008 057 970
- LG ELECTRONICS INC: "Quick switch to macro diversity" 3GPP DRAFT; R2-081904, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080326, 26 March 2008 (2008-03-26), XP050139587 [retrieved on 2008-03-26]

## Description

### BACKGROUND

### 1. Field

The following description relates to a method and apparatus for handover between base stations in a carrier aggregation environment, and more particularly, to a technology for handover between a source base station and a target base station.

### 2. Description of the Related Art

Conventionally, a technology for handover between base stations, in which a mobile terminal terminates connection with a source base station and establishes a new connection with a target base station according to changes in intensity of a signal due to movement of the mobile terminal, is performed in a single carrier environment in which a single carrier frequency is used.

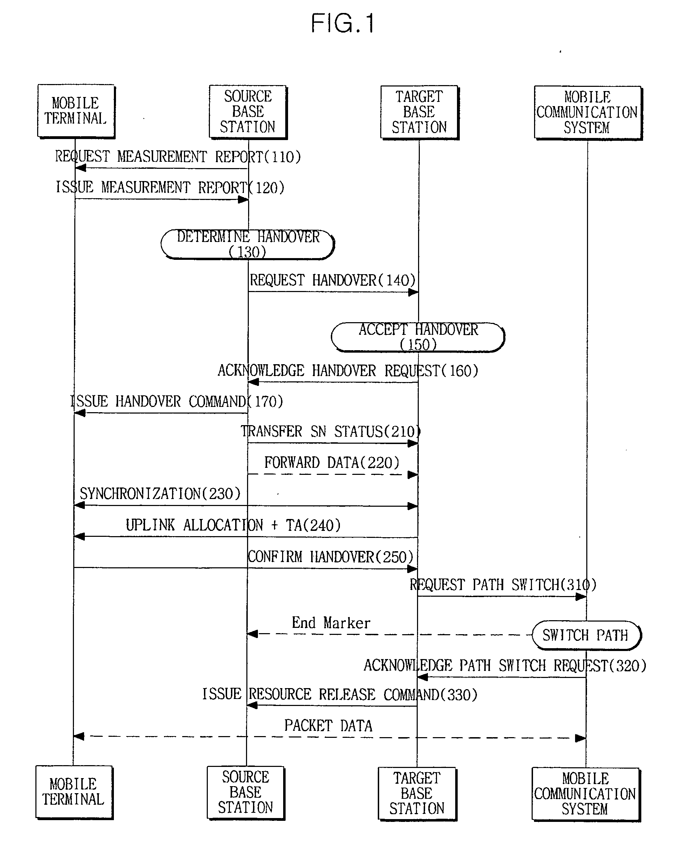

FIG. 1 is a flowchart illustrating a method of handover in a single carrier environment. As shown in FIG. 1, in the signal carrier environment, a handover process includes a handover preparation operation, a handover performing operation, and a handover completing operation.

First, in the handover preparation operation, when a source base station requests a mobile terminal to provide a measurement report (operation 110), the mobile terminal measures the intensity of a signal with respect to a single carrier and sends the measurement report to the source base station (operation 120).

The source base station which receives the measurement report compares the intensity of the signal with respect to the single carrier with a reference value, and when it is determined that a wireless environment is deteriorated based on the comparison result, the source base station decides to perform handover (operation 130), and issues a handover request to a target base station (operation 140).

A handover request message transmitted from the source base station to the target base station includes RRC context for wireless resource control, bearer context, carrier identification information C_RNTI, and the like.

The target base station which receives the handover request from the source base station performs an acceptance control in relation to the handover (operation 150), and issues request acknowledgement to the source base station (operation 160). A handover request acknowledgement message includes a random access channel (RACH) preamble for the mobile terminal to execute random access and new base station identification information C_RNTI.

The source base station which receives the handover request acknowledgement transmits a handover command to the mobile terminal to finish the handover preparation, and then the handover performing is started.

In the handover performing operation, the source base station cannot communicate with the mobile terminal, and thus the source base station transfers a sequence number status to the target base station (operation 210), and forwards all the packets buffered in the source base station to the target base station through a tunnel between the source base station and the target base station (operation 220). The tunnel is formed in the handover preparation operation.

By transferring the sequence number status, synchronization between the mobile terminal and the target base station can be performed (operation 230), and the mobile terminal which succeeds in random access by acquiring timing advance from the target base station confirms the handover to the target base station (operation 250).

The target base station confirms the success of the handover from the base station identification information C_RNTI included in a handover confirmation message. The base station identification information C_RNTI is provided by the target base station when the target base station issues the handover request acknowledgement.

In the handover completing operation, a data path is switched from the source base station to the target station. First, the target base station issues a path switching request to a mobile communication system (operation 310), the mobile communication system updates a user plane to change a download path, and transmits a path switching request acknowledgement to the target base station.

Then, the target base station transmits a user equipment (UE) context release command to the source base station (operation 330), and resources related to the source station are released. However, in the single carrier environment, resources are consumed for tunneling between the source base station and the target base station in the course of the handover.

In addition, radio link control protocol data unit (RLC PDU) which cannot be yet transmitted is discarded and packet data convergence protocol (PDCP) of the target base station starts retransmission, and thus time and resources are wasted.

Moreover, the order of forwarded data and new data after path switching is mixed, it takes resources and time to organize the order, and if the handover fails, it also takes resources and time to restore the forwarded packets.

US 2006/053223 A1 describes a method and system to provide multiple connections to a device from separate physical networks through the same logical network layer while keeping connections persistent. In order to keep connections persistent and change physical networks, at least one additional connection is needed to seamlessly accomplish the "hand-off". If one or more signals from the network host to the device are weak or degraded, then multiple connections can provide redundancy of data being sent from the host to the device reducing the amount of lost data. Multiple connections can be used to increase the amount of data that can be sent to the device at any given time. The system also contains various multiplex servers that are assigned to one or more mobile devices, and acting as the device's proxy in order to transfer data back and forth.

WO 2008/131589 A1 discloses a method for communicating a handover command in a handover process in a cellular communication system, said communication system including a plurality of cells, each of said cells including at least one radio transmitter for providing communication with at least one user entity in a coverage area of said cell, wherein, in said handover process, communication with a user entity in said communication is handed over from a source cell to a target cell, and wherein a handover command is transmitted to said user entity from said communication system prior to the handover. The method comprises the step of transmitting said handover command from at least a first radio transmitter belonging to a cell being different from said source cell.

### SUMMARY

Accordingly, in one aspect, there is provided a method and apparatus for handover between base stations in a carrier aggregation environment in which data is transmitted and received between a mobile terminal and a base station using a plurality of carrier frequency bands.

In one general aspect, in a carrier aggregation environment in which a plurality of carrier components are allocated for a mobile terminal in order to transmit and receive data, a source base station receives measurement report of the carrier component from the mobile terminal, analyzes the content of the measurement report, determine whether to execute handover of each carrier component based on the result of analysis, and manages handover of a particular carrier component which is determined to be handed over.

A source base station may release connection with a carrier component determined to be handed over and maintain connections with remaining carrier components.

The handover may be completed by releasing connections with the remaining carrier components except for the particular carrier component, which is determined to be handed over, in response to a user equipment (UE) context release request from the target base station which has performed a path switch process with a mobile communication system.

Accordingly, in the carrier aggregation environment in which a plurality of carrier components are allocated for a mobile terminal in order to transmit and receive data, the provided handover between base stations can solve the problem of wastage of time and resources which occur in a conventional single carrier environment.

Other features will become apparent to those skilled in the art from the following detailed description, which, taken in conjunction with the attached drawings, discloses exemplary embodiments of the invention.

### BRIEF DESCRIPTION OF THE DRAWINGS

FIG. 1 is a flowchart illustrating a method of handover in a single carrier environment.
FIG. 2 is a diagram illustrating the process of handover in a carrier aggregation environment.
FIG. 3 is a block diagram illustrating a configuration of an apparatus for handover between base stations in a carrier aggregation environment according to an exemplary embodiment.
FIG. 4 is a diagram schematically illustrating a remaining packet processing unit of the handover apparatus in FIG. 3.
FIG. 5 is a flowchart illustrating operations of a handover apparatus for handover between base stations in a carrier aggregation environment according to an exemplary embodiment.

Elements, features, and structures are denoted by the same reference numerals throughout the drawings and the detailed description, and the size and proportions of some elements may be exaggerated in the drawings for clarity and convenience.

### DETAILED DESCRIPTION

The following detailed description is provided to assist the reader in gaining a comprehensive understanding of the methods, apparatuses and/or systems described herein. Various changes, modifications, and equivalents of the systems, apparatuses and/or methods described herein will suggest themselves to those of ordinary skill in the art. Descriptions of well-known functions and structures are omitted to enhance clarity and conciseness.

In the following description, a detailed description of known functions and configurations incorporated herein will be omitted when it may obscure the subject matter with unnecessary details.

Before describing the exemplary embodiments, terms used throughout this specification are defined. These terms are defined in consideration of functions according to exemplary embodiments, and can be varied according to a purpose of a user or manager, or precedent and so on. Therefore, definitions of the terms should be made on the basis of the overall context.

The term "carrier aggregation" refers to an aggregation of carrier components that process a number of carrier waves allocated for data transmission/receipt between a mobile terminal and a base station.

The term "carrier radio network temporary identity (Ca_RNTI)" indicates unique identification information for identifying each carrier component.

The term "source base station" is a base station which is currently connected with a mobile terminal but is to hand over to a target base station since wireless condition of one of carrier components is poor.

The term "target base station" is a base station which is not currently connected with a mobile terminal but is to be connected to the mobile terminal after handover since wireless condition of its carrier components is good.

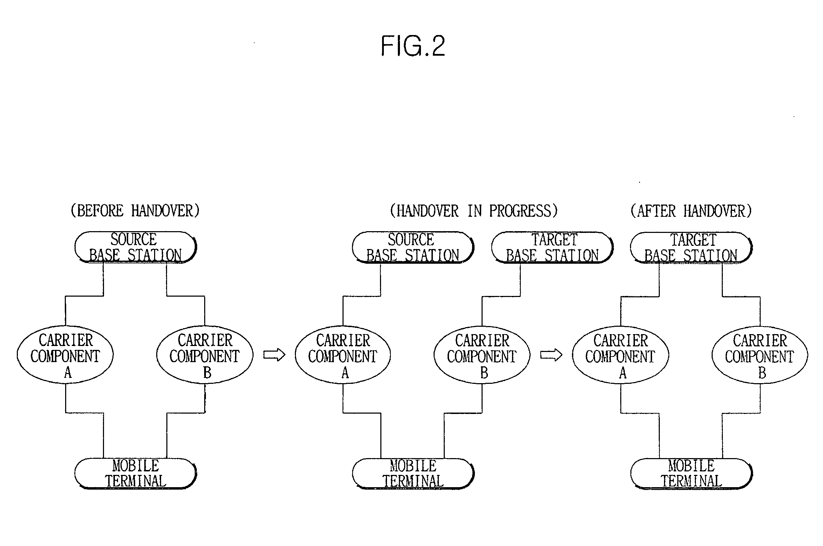

FIG. 2 is a diagram illustrating the process of handover in carrier aggregation environment. For example, when a plurality of carriers a, b, c, and d are allocated between a mobile terminal and a base station, carrier aggregation consists of carrier components A, B, C, and D which, respectively, process the carriers a, b, c, and d.

As shown in FIG. 2, it is assumed that before handover, the data is transmitted and received by a user equipment (UE) and a source base station through the carrier components A and B and data paths used by the UE utilize each of the carrier components A and B.

When handover from the source base station to a target base station is determined to be performed because wireless condition of the carrier component B is poor, the source base station requests handover with respect to the carrier component B to the target base station, and a data path using the carrier component B is transferred to the carrier component A such that continuous data transmission/receipt is enabled in the handover process.

After the handover of the carrier component B is completed, the target base station releases a connection between the carrier component A and the source base station, and processes data transmission/receipt using the carrier components A and B, thereby completing the handover process.

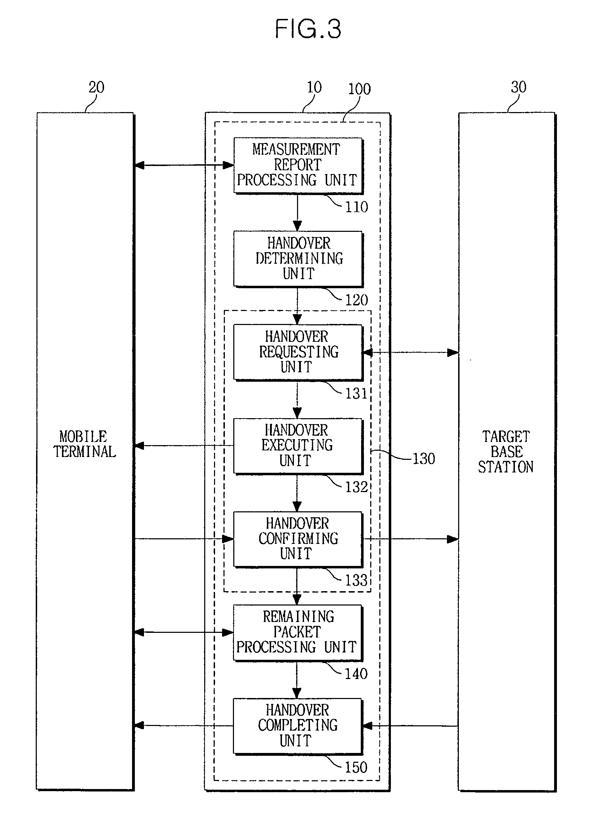

FIG. 3 is a block diagram illustrating a configuration of an apparatus 100 for handover between base stations in a carrier aggregation environment according to an exemplary embodiment. Referring to FIG. 3, the apparatus 100 for handover between base stations in the carrier aggregation environment in which a plurality of carrier components are allocated for a single mobile terminal 20 in order to transmit and receive data is formed as a piece of hardware or software, or a combination of the two. The apparatus 100 includes a measurement report processing unit 110, a handover determining unit 120, and a handover managing unit 130.

The measurement report processing unit 110 requests the mobile terminal to provide a measurement report for each carrier component and receives each measurement report from the mobile terminal 20.

The measurement report may include information on a quality measurement of each carrier component. For example, the information on quality measurement may be a signal intensity of each carrier component.

The handover determining unit 120 analyzes the content of the measurement report received by the measurement report processing unit and determines whether to execute handover of each carrier component.

For example, the handover determining unit 120 may compare a signal intensity of each carrier component contained in the content of the measurement report with a reference value, and determine whether to execute handover of a particular carrier component when the signal intensity of the corresponding carrier component is equal or smaller than the reference value.

The handover managing unit 130 performs handover between base stations in the carrier aggregation environment in which data is transmitted and received using a plurality of carrier frequency bands between the mobile terminal and the base station by executing handover of a particular carrier component for which handover is determined to be executed by the handover determining unit 120.

In detail, the handover managing unit 130 of the apparatus 100 in the carrier aggregation environment may include a handover requesting unit 131, a handover executing unit 132, and a handover confirming unit 133.

The handover requesting unit 131 requests a target base station 30 to execute handover of a determined carrier component, and receives a handover request acknowledgement from the target base station 30.

The handover request message to be sent to the target base station 30 from the handover requesting unit 131 includes RRC context, bearer context, carrier radio network temporary identifier (Ca_RNTI) for identification of each carrier component, and the like.

While in the conventional single carrier environment, a handover request message includes cell radio network temporary identifier (C_RNTI) for identification of a base station, a Ca_RNTI for identification of each carrier component is included in the handover request message according to the exemplary embodiment, and thus the target base station that receives the handover request determines whether to perform handover with respect to a relevant individual carrier component.

That is, in handover between base stations, handover is selectively performed for individual carrier components depending on wireless conditions in the carrier aggregation environment according to the exemplary embodiment.

Upon receiving a handover request acknowledgement transferred from the handover requesting unit 131, the handover executing unit 132 transmits to the mobile terminal 20 the handover command for the carrier component for which handover is determined to be executed, and executes handover by releasing a connection for the carrier component which is determined to be handed over. At this time, the handover executing unit 132 maintains connections with the remaining carrier components except for the carrier component which is determined to be handed over.

That is, the target base station that has received the handover request determines whether to accept the handover to be executed and sends the handover request acknowledgement to the handover requesting unit 131. Then, the handover executing unit 132 transmits the handover command for the determined carrier component to the mobile terminal 20. The handover command includes a carrier RNTI (Ca-RNTI) for indicating with respect to which carrier component the handover will be executed.

Then, the handover executing unit 132 releases a connection for the carrier component which is determined to be handed over, while maintaining connections with the remaining carrier components.

In a conventional signal carrier environment, a source base station releases all connections with the entire resource of a mobile terminal, whereas in the exemplary embodiment, only the connection for the carrier component which is determined to be handed over is released and connections for the remaining carrier components are maintained, and thus forwarded packets which are not yet transmitted can be processed by use of the carrier components for which connections are maintained. Therefore, resource consumption for tunneling between a source base station and a target base station can be prevented, unlike the conventional single carrier environment. The prevention of the resource consumption will be described in detail later.

The handover confirming unit 133 transmits carrier handover confirmation information to the target base station 30 according to confirmation of the mobile terminal 20 which is synchronized with the target base station 30 in response to the handover command transmitted from the handover executing unit 132.

In detail, the mobile terminal 20 that receives the handover command performs a random access to the carrier component which is determined to be handed over so as to perform synchronization with the target base station 30, and provides the target base station 20 with confirmation of the handover via the source base station 10 when the random access process is successful by obtaining timing advance (TA) from the target base station 30.

In a conventional signal carrier environment, a connection between the mobile terminal and the source base station is completely disconnected in the course of handover, and thus the target base station should perform uplink allocation during TA process. On the other hand, in the exemplary embodiment, uplink allocation is not necessary since the remaining carrier components except for the carrier component which is determined to be handed over are still connected with the source base station 30.

Meanwhile, the mobile terminal 20 performs uplink buffering and the target base station 30 performs downlink buffering in order to hold transmission of a new traffic packet generated after confirming the handover.

Accordingly, the handover apparatus 100 can prevent waste of time and resources in the process of handover between base stations, which may occur in a conventional single carrier environment.

According to another aspect, the handover apparatus 100 may further include a remaining packet processing unit 140. The remaining packet processing unit 140 processes remaining packets, which were originally to be processed by the carrier component which is determined to be handed over, by use of remaining carrier components, for which connections are maintained, after the handover executing unit 130 executes the handover of the carrier component which is determined to be handed over.

That is, in the handover process of a conventional signal carrier environment, since a connection between a source base station and a mobile terminal is completely disconnected, packets that are not yet transmitted, that is, the remaining packets, should be forwarded through a tunnel between the source base station and a target base station for the packet transmission.

However, in the current exemplary embodiment, since only the connection for the carrier component which is determined to be handed over is released and connections with the remaining carrier components are still maintained, the remaining packets which were originally to be processed by the carrier component which is determined to be handed over are processed by use of the remaining carrier components for which connections are still maintained. Thus, waste of resources for tunneling between the source base station and the target base station in the course of processing packets that are not yet transmitted can be prevented, and mixture of forwarded packets and new packets can be fundamentally prevented.

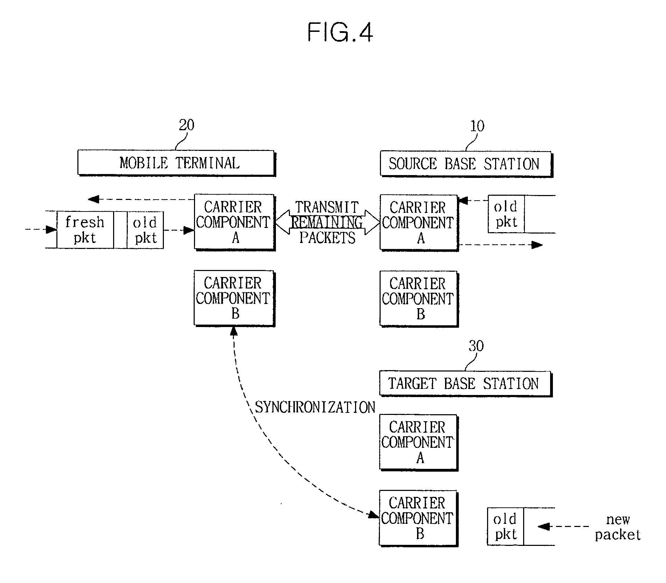

FIG. 4 is a diagram schematically illustrating the remaining packet processing unit 140 of the handover apparatus in FIG. 3. Referring to FIG. 4, after handover of a carrier component B is performed, processing of the remaining packets (denoted by 'old pkt' in FIG. 4) is performed between the mobile terminal 20 and the source base station 10 by use of a carrier component A, and when the handover is completed while new packets (denoted by "fresh pkt" and "new packet" in FIG. 4) are being buffered from the mobile terminal to the target base station 30, the new packets are processed between the mobile terminal 20 and the target base station 30 by use of the carrier component B.

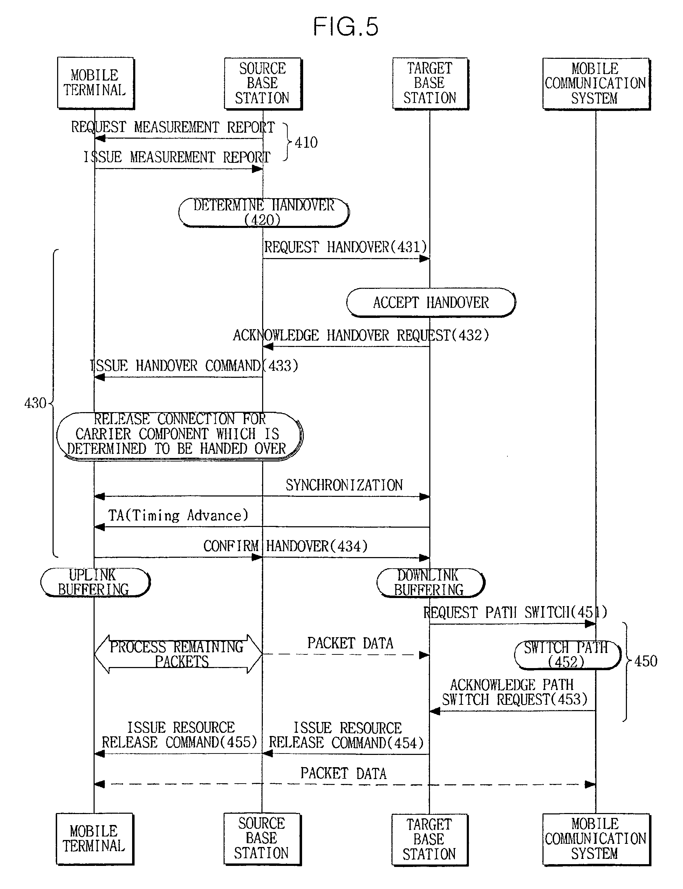

According to another aspect, the handover apparatus 100 may further include a handover completing unit 150. The handover completing unit 150 releases connections with the remaining carrier components, except for the carrier component which is determined to be handed over, in response to a user equipment (UE) context release request from the target base station 30 which has performed a path switching process with a mobile communication system 40 (referring to FIG. 5), after the remaining packet processing unit 140 processes the remaining packets.

When the target base station 30 which has received carrier handover confirmation from the mobile terminal 20 issues a path switching request to the mobile system 40, the mobile system 40 updates a user plane to change a download path and transmits a path switching request acknowledgment to the target base station 30 to perform a path switch process.

After the remaining packets are processed, there is no need to maintain the connections between the mobile terminal 20 and the source base station 30, and thus the target base station 30 transmits a user equipment (UE) context release command to the source base station 10 through the handover completing unit 150 in order to release the UE context of the carrier components which is connected with the source base station 10 and the mobile terminal 20. Then, the source base station 10 relays the UE context release command to the mobile terminal 20 and accordingly wireless resources related to the carrier components for which connection between the source base station 10 and the mobile terminal 20 has been maintained is released, thereby completing the handover.

Subsequently, transmission of new packets buffered after the handover is started between the target base station 30 and the mobile terminal 20 through the handed-over carrier component, and the remaining carrier components are synchronized between the target base station 30 and the mobile terminal 20 so that data transmission is possible through a plurality of carrier frequency bands in the carrier aggregation environment.

Accordingly, the handover apparatus 100 can solve the problem of waste of time and resources which occur in a conventional single carrier environment.

Operations of an apparatus for handover between base stations in the carrier aggregation environment according to an exemplary embodiment will now be described with reference to FIG. 5. FIG. 5 is a flowchart illustrating operations of a handover apparatus for handover between base stations in a carrier aggregation environment according to an exemplary embodiment.

In the carrier aggregation environment in which a plurality of carrier components are allocated for a single mobile terminal 20 in order to transmit and receive data, first a source base station 10 requests the mobile terminal 20 to provide a measurement report for each control component and receives the measurement report for each carrier component from the mobile terminal 10 (operation 410).

The source base station 10 which has received the measurement report from the mobile terminal 20 analyzes the content of the measurement report and determines whether to accept the handover of a particular carrier component (operation 420).

At this time, the measurement report may include Information on a quality measurement of each carrier component. Also, the quality measurement information may be a signal intensity of the carrier component.

For example, a signal intensity of each carrier component is compared with a reference value, and when the signal intensity is equal or smaller than the reference value, it can be determined to execute handover of the corresponding carrier component.

Once it is determined to execute handover of the particular carrier component in operation 420, the source base station manages handover of the particular carrier component, and thereby handover between the base stations 20 and 30 can be performed in the carrier aggregation environment in which data transmission/receipt is performed using a plurality of carrier frequency bands (operation 430).

In detail, the source base station 10 issues a handover request to the target base station 30 with respect to the carrier component which is determined to be handed over (operation 431). Then, the target base station 30, which has determined whether to accept the handover requested by the source base station 10, transmits a handover request acknowledgement to the source base station 10 (operation 432).

The source base station 10, which has received the handover request acknowledgement from the target base station 30, transmits a handover command for the carrier component which is determined to be handed over to the mobile terminal 20 (operation 433).

When the handover command is transmitted in operation 433, a connection between the source base station 10 and the mobile terminal 20 with respect to the carrier component which is determined to be handed over is released and the connections with respect to the remaining carrier components, except for the carrier component which is determined to be handed over, are maintained.

That is, in a conventional signal carrier environment, a source base station releases all connections with the entire resource of a mobile terminal, whereas in the exemplary embodiment, the connection only for the carrier component which is determined to be handed over is released and connections for the remaining carrier components are maintained, and thus packets which are not yet transmitted can be processed by use of the carrier components for which connections are maintained.

The source base station 10 transmits carrier handover confirmation to the target base station 30 according to confirmation of the mobile terminal 20 which is synchronized with the target base station 30 in response to the handover command transmitted in operation 433 (operation 434).

In detail, the mobile terminal 20 that receives the handover command, performs a random access to the carrier component, which is determined to be handed over, so as to perform synchronization with the target base station 30, and provides the target base station 20 with confirmation of the handover via the source base station 10 when the random access process is successful by obtaining a timing advance (TA) from the target base station 30.

In a conventional signal carrier environment, a connection between the mobile terminal and the source base station is completely disconnected in the course of handover, and thus the target base station should perform uplink allocation during TA process. On the other hand, in the exemplary embodiment, uplink allocation is not necessary since the remaining carrier components, except for the carrier component which is determined to be handed over, are still connected with the source base station 30.

Meanwhile, the mobile terminal 20 performs uplink buffering and the target base station 30 performs downlink buffering in order to hold transmission of a new traffic packet generated after confirming the handover in operation 434.

Accordingly, the handover apparatus can prevent waste of time and resources in the process of handover between base stations 10 and 30, which may occur in a conventional single carrier environment.

According to another aspect, the remaining packets may be processed (operation 440). After the handover of the carrier component which is determined to be handed over is performed in operation 430, remaining packets which were originally to be processed by the carrier component, which is determined to be handed over, are processed by use of the carrier components for which connections are maintained, except for the carrier component which is determined to be handed over.

That is, in the handover process of a conventional signal carrier environment, since a connection between a source base station and a mobile terminal is completely disconnected, packets that are not yet transmitted, that is, the remaining packets, should be forwarded through a tunnel between the source base station and a target base station for the packet transmission.

However, in the current exemplary embodiment, since only the connection for the carrier component which is determined to be handed over is released and connections with the remaining carrier components are still maintained, the remaining packets which were originally to be processed by the carrier component which is determined to be handed over are processed by use of the remaining carrier components for which connections are still maintained in operation 440. Thus, waste of resource for tunneling between the source base station and the target base station in the course of processing packets that are not yet transmitted can be prevented, and a mixture of forwarded packets and new packets can be fundamentally prevented.

Once the carrier handover confirmation is transmitted from the mobile terminal 20 to the target base station 30 via the source base station 10, the handover is completed (operation 450). In detail, when the target base station 30 issues a path switching request to the mobile communication system 40 (operation 451), the mobile communication system 40 updates a user plane to change a download path (operation 452), and then transmits a path switching acknowledgement to the target base station 30 (operation 453).

After the remaining packets are processed, there is no need to maintain the connections between the mobile terminal 20 and the source base station 30, and thus the target base station 30 transmits a UE context release command to the source base station 10 in order to release resources of the carrier components which is connected with the source base station 10 and the mobile terminal 20 (operation 454). Then, the source base station 10 relays the UE context release command to the mobile terminal 20 (operation 455) and accordingly resources related to the carrier components for which connection between the source base station 10 and the mobile terminal 20 has been maintained is released, thereby completing the handover.

Subsequently, transmission of new packets buffered after the handover is started between the target base station 30 and the mobile terminal 20 through the handed-over carrier component, and the remaining carrier components are synchronized between the target base station 30 and the mobile terminal 20 so that data transmission is possible through a plurality of carrier frequency bands in the carrier aggregation environment.

Accordingly, the handover apparatus 100 can solve the problem of wastage of time and resources which occur in a conventional single carrier environment.

The handover apparatus according to the exemplary embodiment is industrially applicable to a handover technology and its applications.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An apparatus for handover between base stations (10,30) in a carrier aggregation environment in which a plurality of carrier components are allocated for a single mobile terminal (20) in order to transmit and receive data, the apparatus **characterized by**
a measurement report processing unit (110) arranged to request the mobile terminal (20) to provide a measurement report for each carrier component and receive the measurement report of the carrier component from the mobile terminal;
a handover determining unit (120) arranged to analyze the content of the measurement report received by the measurement report processing unit (110) and determine whether to execute handover of each carrier component based on the result of analysis; and
a handover managing unit (130) arranged to manage handover of a particular carrier component which is determined to be handed over.

2. The apparatus of claim 1, wherein the handover managing unit (130) comprises:
a handover requesting unit (131) arranged to request handover of the determined particular carrier component to a target base station (30) and receive a handover request acknowledgement from the target base station (30);
a handover executing unit (132) arranged to transmit to the mobile terminal (20) a handover command with respect to the particular carrier component which is determined to be handed over, to release a connection for the particular carrier component and execute handover upon receiving the handover request acknowledgement from the handover requesting unit (131); and
a handover confirming unit (133) arranged to transmit carrier handover confirmation to the target base station (30) according to confirmation of the mobile terminal (20) which is synchronized with the target base station in response to the handover command transmitted from the handover executing unit (132).

3. The apparatus of claim 1 or 2, wherein the content of the measurement report includes information on a quality measurement of each carrier component.

4. The apparatus of claim 3, wherein the information on quality measurement of the carrier component is a signal intensity of the carrier component.

5. The apparatus of claim 2, 3, or 4 wherein the handover executing unit (132) maintains connections with remaining carrier components, except for the particular carrier component which is determined to be handed over.

6. The apparatus of claim 5, further comprising:
a remaining packet processing unit (140) arranged to process remaining packets, which were originally to be processed by the particular carrier component which is determined to be handed over, by use of the remaining carrier components for which connections are maintained after the handover executing unit executes the handover of the particular carrier component which is determined to be handed over.

7. The apparatus of claim 6, further comprising:
a handover completing unit (150) arranged to release connections with the remaining carrier components except for the particular carrier component, which is determined to be handed over, in response to a user equipment (UE) context release request from the target base station (30) which has performed a path switch process with a mobile communication system, after the remaining packet processing unit processes the remaining packets.

8. A method of handover between base stations in a carrier aggregation environment in which a plurality of carrier components are allocated for a single mobile terminal (20) in order to transmit and receive data, the method **characterized by**:
requesting, at a source base station (10), the mobile terminal (20) to provide a measurement report for each carrier component and receiving the measurement report of the carrier component from the mobile terminal;
analyzing the content of the measurement report received by the source base station (10) and determining to execute handover of a particular carrier component; and
managing, at the source base station (10), handover of the particular carrier component which is determined to be handed over.

9. The method of claim 8, wherein the performing of the handover comprises:
requesting, at the source base station (10), handover of the particular carrier component, which is determined to be handed over, to a target base station (30);
receiving, at the source base station (10) a handover request acknowledgement from the target base station (30) which determines whether to accept the handover;
transmitting a handover command for the particular carrier component to the mobile terminal (20) from the source base station (10) which receives the handover request acknowledgement from the target base station (30); and
transmitting a carrier handover confirmation from the source base station (10) to the target base station (30) according to confirmation of the mobile terminal (20) which is synchronized with the target base station (30) in response to the handover command.

10. The method of claim 8 or 9, wherein the content of the measurement report includes information on a quality measurement of each carrier component.

11. The method of claim 10, wherein the information on quality measurement of each carrier component is a signal intensity of the carrier component.

12. The method of claim 9, 10, or 11 wherein after the handover command is transmitted, a connection between the source base station (10) and the mobile terminal (20) with respect to the particular carrier component which is determined to be handed over is released.

13. The method of claim 12, wherein connections between the source base station (10) and the mobile terminal (20) with respect to remaining carrier components, except for the particular carrier component which is determined to be handed over, are maintained.

14. The method of claim 13, further comprising:
after performing the handover of the particular carrier component, processing remaining packets, which were originally to be processed by the particular carrier component, by use of the carrier components for which connections are maintained.

15. The method of claim 14, further comprising:
after processing the remaining packets, releasing the connections with the remaining carrier components for which connections are maintained, except for the particular carrier component, according to a mobile terminal release request from the target base station (30) which has performed a path switching process with a mobile communication system.

## Patentansprüche

1. Vorrichtung zur Übergabe zwischen Basisstationen (10, 30) in einer Trägeraggregationsumgebung, in welcher eine Vielzahl von Trägerkomponenten einem einzigen mobilen Endgerät (20) zugeteilt ist, um Daten zu senden und zu empfangen, welche Vorrichtung **gekennzeichnet ist durch**:
eine Messberichtsverarbeitungseinheit (110), die dazu eingerichtet ist, das mobile Endgerät (20) aufzufordern, einen Messbericht für eine jeweilige Trägerkomponente zur Verfügung zu stellen und den Messbericht der Trägerkomponente von dem mobilen Endgerät zu empfangen;
eine Übergabebestimmungseinheit (120), die dazu eingerichtet ist, den Inhalt des **durch** die Messberichtsverarbeitungseinheit (110) empfangenen Messberichts zu analysieren und basierend auf dem Analyseergebnis zu bestimmen, ob eine Übergabe einer jeweiligen Trägerkomponente auszuführen ist; und
eine Übergabemanagementeinheit (130), die dazu eingerichtet ist, eine Übergabe einer speziellen Trägerkomponente zu managen, die dazu bestimmt ist, übergeben zu werden.

2. Vorrichtung nach Anspruch 1, wobei die Übergabemanagementeinheit (130) folgendes aufweist:
eine Übergabeaufforderungseinheit (131), die dazu eingerichtet ist, zu einer Übergabe der bestimmten speziellen Trägerkomponente zu einer Ziel-Basisstation (30) aufzufordorn und eine Übergabeaufforderungsbestätigung von der Ziel-Basisstation (30) zu empfangen;
eine Übergabeausführungseinheit (132), die dazu eingerichtet ist, einen Übergabebefehl in Bezug auf die spezielle Trägerkomponente, die dazu bestimmt ist, übergeben zu werden, zu dem mobilen Endgerät (20) zu senden, um eine Verbindung für die spezielle Trägerkomponente aufzulösen und auf ein Empfangen der Übergabeaufforderungsbestätigung von der Übergabeaufforderungseinheit (131) hin eine Übergabe auszuführen; und
eine Übergabebestätigungseinheit (133), die dazu eingerichtet ist, gemäß einer Bestätigung des mobilen Endgeräts (20), das mit der Ziel-Basisstation (30) synchronisiert ist, in Rektion auf den von der Übergabeausführungseinheit (132) gesendeten Übergabebefehl eine Trägerübergabebestätigung zu der Ziel-Basisstation (30) zu senden.

3. Vorrichtung nach Anspruch 1 oder 2, wobei der Inhalt des Messberichts Information über eine Qualitätsmessung einer jeweiligen Trägerkomponente enthält.

4. Vorrichtung nach Anspruch 3, wobei die Information über eine Qualitätsmessung der Trägerkomponente eine Signalintensität der Trägerkomponente ist.

5. Vorrichtung nach Anspruch 2, 3 oder 4, wobei die Übergabeausführungseinheit (132) Verbindungen mit übrigen Trägerkomponenten außer der speziellen Trägerkomponente, die dazu bestimmt ist, übergeben zu werden, beibehält.

6. Vorrichtung nach Anspruch 5, die weiterhin folgendes aufweist:
eine Verarbeitungseinheit für übrige Pakete (140), die dazu eingerichtet ist, übrige Pakete, die ursprünglich durch die spezielle Trägerkomponente zu verarbeiten waren, die dazu bestimmt ist, übergeben zu werden, durch Verwenden der übrigen Trägerkomponenten, für welche Verbindungen beibehalten werden, zu verarbeiten, nachdem die Übergabeausführungseinheit die Übergabe der speziellen Trägerkomponente ausführt, die dazu bestimmt ist, übergeben zu werden.

7. Vorrichtung nach Anspruch 6, die weiterhin folgendes aufweist:
eine Übergabebeendigungseinheit (150), die dazu eingerichtet ist, Verbindungen mit den übrigen Trägerkomponenten außer der speziellen Trägerkomponente, die dazu bestimmt ist, übergeben zu werden, in Reaktion auf eine Anwendergeräte-(UE-)Kontext-Auflösungsaufforderung von der Ziel-Basisstation (30), die einen Pfadumschaltprozess mit einem mobilen Kommunikationssystem durchgeführt hat, aufzulösen, nachdem die Verarbeitungseinheit für übrige Pakete die übrigen Pakete verarbeitet.

8. Verfahren einer Übergabe zwischen Basisstationen in einer Trägeraggregationsumgebung, in welcher eine Vielzahl von Trägerkomponenten einem einzigen mobilen Endgerät (20) zugeteilt ist, um Daten zu senden und zu empfangen, welches Verfahren **gekennzeichnet ist durch**:
bei einer Quellen-Basisstation (10) Auffordern des mobilen Endgeräts (20), einen Messbericht für ein jeweilige Trägerkomponente zur Verfügung zu stellen, und Empfangen des Messberichts der Trägerkomponente von dem mobilen Endgerät;
Analysieren des Inhalts des **durch** die Quellen-Basisstation (10) empfangenen Messberichts und Bestimmen, eine Übergabe einer speziellen Trägerkomponente auszuführen; und
bei der Quellen-Basisstation (10) Managen einer Übergabe der speziellen Trägerkomponente, die dazu bestimmt ist, übergeben zu werden.

9. Verfahren nach Anspruch 8, wobei das Durchführen der Übergabe folgendes aufweist:
bei der Quellen-Basisstation (10) Auffordern zu einer Übergabe der speziellen Trägerkomponente, die dazu bestimmt, übergeben zu werden, zu einer Ziel-Basisstation (30);
bei der Quellen-Basisstation (10) Empfangen einer Übergabeaufforderungsbestätigung von der Ziel-Basisstation (30), die bestimmt, ob die Übergabe zu akzeptieren ist;
Senden eines Übergabebefehls für die spezielle Trägerkomponente zu dem mobilen Endgerät (20) von der Quellen-Basisstation (10), die die Übergabeaufforderungsbestätigung von der Ziel-Basisstation (30) empfängt; und
Senden einer Trägerübergabebestätigung von der Quellen-Basisstation (10) zu der Ziel-Basisstation (30) gemäß einer Bestätigung des mobilen Endgeräts (20), das mit der Ziel-Basisstation (30) synchronisiert ist, in Reaktion auf den Übergabebefehl.

10. Verfahren nach Anspruch 8 oder 9, wobei der Inhalt des Messberichts Information über eine Qualitätsmessung einer jeweiligen Trägerkomponente enthält.

11. Verfahren nach Anspruch 10, wobei die Information über eine Qualitätsmessung einer jeweiligen Trägerkomponente eine Signalintensität der Trägerkomponente ist.

12. Verfahren nach Anspruch 9, 10 oder 11, wobei, nachdem der Übergabebefehl gesendet ist, eine Verbindung zwischen der Quellen-Basisstation (10) und dem mobilen Endgerät (20) in Bezug auf die spezielle Trägerkomponente, die dazu bestimmt ist, übergeben zu werden, aufgelöst wird.

13. Verfahren nach Anspruch 12, wobei Verbindungen zwischen der Quellen-Basisstation (10) und dem mobilen Endgerät (20) in Bezug auf die übrigen Trägerkomponenten außer der speziellen Trägerkomponente, die dazu bestimmt, übergeben zu werden, beibehalten werden.

14. Verfahren nach Anspruch 13, das weiterhin folgendes aufweist:
nach einem Durchführen der Übergabe der speziellen Trägerkomponente Verarbeiten übriger Pakete, die ursprünglich durch die spezielle Trägerkomponente zu verarbeiten waren, durch Verwenden der Trägerkomponenten, für welche Verbindungen beibehalten sind.

15. Verfahren nach Anspruch 14, das weiterhin folgendes aufweist:
nach einem Verarbeiten der übrigen Pakete Auflösen der Verbindungen mit den übrigen Trägerkomponenten, für welche Verbindungen beibehalten sind, außer der speziellen Trägerkomponente gemäß einer Auflösungsaufforderung für mobile Endgeräte von der Ziel-Basisstation (30), die einen Pfadumschaltprozess mit einem mobilen Kommunikationssystem durchgeführt hat.

## Revendications

1. Appareil de transfert entre des stations de base (10, 30) dans un environnement de regroupement de porteuses dans lequel une pluralité de composantes porteuses est allouée à un seul terminal mobile (20) de façon à transmettre et recevoir des données, l'appareil étant **caractérisé par** :
une unité de traitement de rapport de mesure (110) agencée pour demander au terminal mobile (20) de fournir un rapport de mesure pour chaque composante porteuse et recevoir le rapport de mesure de la composante porteuse en provenance du terminal mobile ;
une unité de détermination de transfert (120) agencée pour analyser le contenu du rapport de mesure reçu par l'unité de traitement de rapport de mesure (110) et déterminer s'il faut exécuter le transfert de chaque composante porteuse d'après le résultat de l'analyse ; et
une unité de gestion de transfert (130) agencée pour gérer le transfert d'une composante porteuse particulière qui est déterminée comme étant à transférer.

2. Appareil selon la revendication 1, dans lequel l'unité de gestion de transfert (130) comprend :
une unité de demande de transfert (131) agencée pour demander le transfert de la composante porteuse particulière déterminée à une station de base cible (30) et recevoir un accusé de réception de demande de transfert en provenance de la station de base cible (30) ;
une unité d'exécution de transfert (132) agencée pour transmettre au terminal mobile (20) un ordre de transfert par rapport à la composante porteuse particulière qui est déterminée comme étant à transférer, pour libérer une connexion pour la composante porteuse particulière et exécuter le transfert dès réception de l'accusé de réception de demande de transfert provenant de l'unité de demande de transfert (131) ; et
une unité de confirmation de transfert (133) agencée pour transmettre la confirmation de transfert de porteuse à la station de base cible (30) selon la confirmation du terminal mobile (20) qui est synchronisé avec la station de base cible en réponse à l'ordre de transfert transmis depuis l'unité d'exécution de transfert (132).

3. Appareil selon la revendication 1 ou 2, dans lequel le contenu du rapport de mesure comprend une information sur une mesure de qualité de chaque composante porteuse.

4. Appareil selon la revendication 3, dans lequel l'information sur la mesure de qualité de la composante porteuse est une intensité de signal de la composante porteuse.

5. Appareil selon la revendication 2, 3 ou 4, dans lequel l'unité d'exécution de transfert (132) maintient les connexions avec les composantes porteuses restantes, excepté pour la composante porteuse particulière qui est déterminée comme étant à transférer.

6. Appareil selon la revendication 5, comprenant en outre :
une unité de traitement de paquets restants (140) agencée pour traiter les paquets restants, qui étaient à l'origine à traiter par la composante porteuse particulière qui est déterminée comme étant à transférer, au moyen des composantes porteuses restantes pour lesquelles les connexions sont maintenues après que l'unité d'exécution de transfert exécute le transfert de la composante porteuse particulière qui est déterminée comme étant à transférer.

7. Appareil selon la revendication 6, comprenant en outre :
une unité d'achèvement de transfert (150) agencée pour libérer des connexions avec les composantes porteuses restantes à l'exception de la composante porteuse particulière, qui est déterminée comme étant à transférer, en réponse à une demande de libération de contexte de l'équipement utilisateur (UE) provenant de la station de base cible (30) qui a réalisé un processus de commutation de chemin avec un système de communication mobile, après que l'unité de traitement de paquets restants traite les paquets restants.

8. Procédé de transfert entre des stations de base dans un environnement de regroupement de porteuses dans lequel une pluralité de composantes porteuses est allouée à un seul terminal mobile (20) afin de transmettre et recevoir des données, le procédé étant **caractérisé par** :
la demande, au niveau d'une station de base source (10), au terminal mobile (20) de fournir un rapport de mesure pour chaque composante porteuse et la réception du rapport de mesure de la composante porteuse provenant du terminal mobile ;
l'analyse du contenu du rapport de mesure reçu par la station de base source (10) et la détermination de l'exécution de transfert d'une composante porteuse particulière ; et
la gestion, au niveau de la station de base source (10), du transfert de la composante porteuse particulière qui est déterminée comme étant à transférer.

9. Procédé selon la revendication 8, dans lequel la réalisation du transfert comprend :
la demande, au niveau de la station de base source (10), du transfert de la composante porteuse particulière, qui est déterminée comme étant à transférer, à une station de base cible (30) ;
la réception, au niveau de la station de base source (10), d'un accusé de réception de demande de transfert provenant de la station de base cible (30) qui détermine s'il faut accepter le transfert ;
la transmission d'un ordre de transfert pour la composante porteuse particulière au terminal mobile (20) provenant de la station de base source (10) qui reçoit l'accusé de réception de demande de transfert provenant de la station de base cible (30) ; et
la transmission d'une confirmation de transfert de porteuse provenant de la station de base source (10) à la station de base cible (30) selon la confirmation du terminal mobile (20) qui est synchronisé avec la station de base cible (30) en réponse à l'ordre de transfert.

10. Procédé selon la revendication 8 ou 9, dans lequel le contenu du rapport de mesure comprend une information sur une mesure de qualité de chaque composante porteuse.

11. Procédé selon la revendication 10, dans lequel l'information sur la mesure de qualité de chaque composante porteuse est une intensité de signal de la composante porteuse.

12. Procédé selon la revendication 9, 10 ou 11, dans lequel après que l'ordre de transfert est transmis, une connexion entre la station de base source (10) et le terminal mobile (20) par rapport à la composante porteuse particulière qui est déterminée comme étant à transférer est libérée.

13. Procédé selon la revendication 12, dans lequel des connexions entre la station de base source (10) et le terminal mobile (20) par rapport aux composantes porteuses restantes, à l'exception de la composante porteuse particulière qui est déterminée comme étant à transférer, sont maintenues.

14. Procédé selon la revendication 13, comprenant en outre :
après réalisation du transfert de la composante porteuse particulière, le traitement des paquets restants, qui étaient à l'origine à traiter par la composante porteuse particulière, au moyen des composantes porteuses pour lesquelles des connexions sont maintenues.

15. Procédé selon la revendication 14, comprenant en outre :
après traitement des paquets restants, la libération des connexions avec les composantes porteuses restantes pour lesquelles des connexions sont maintenues, à l'exception de la composante porteuse particulière, selon une demande de libération de terminal mobile provenant de la station de base cible (30) qui a réalisé un processus de commutation de chemin avec un système de communication mobile.
